(19) Europäisches Patentamt
European Patent Office
Office européen des brevets

(11) Publication number: **0 156 031**
**B1**

(12) # EUROPEAN PATENT SPECIFICATION

(45) Date of publication of patent specification: **28.10.87**

(51) Int. Cl.$^4$: **C 09 K 7/02,** E 21 B 43/22

(21) Application number: **84115972.6**

(22) Date of filing: **13.12.82**

(60) Publication number of the earlier application in accordance with Art. 76 EPC: **0 082 657**

(54) **Method of oil recovery.**

(30) Priority: **15.12.81 US 331101**
**15.12.81 US 331102**
**17.05.82 US 378921**
**25.08.82 US 411174**
**25.08.82 US 411167**
**25.08.82 US 411173**
**25.08.82 US 411182**

(43) Date of publication of application:
**02.10.85 Bulletin 85/40**

(45) Publication of the grant of the patent:
**28.10.87 Bulletin 87/44**

(84) Designated Contracting States:
**BE DE GB IT NL SE**

(56) References cited:
**GB-A-2 044 321**
**US-A-3 679 000**
**US-A-3 744 566**
**US-A-4 077 930**
**US-A-4 137 969**
**US-A-4 293 427**

(73) Proprietor: **CALGON CORPORATION**
**Route 60-Campbell's Run Road**
**Robinson Township Pennsylvania 15205 (US)**

(72) Inventor: **Costello, Christine A.**
**116 Essex Knoll Drive**
**Coraopolis Pennsylvania 15108 (US)**
Inventor: **Matz, Gary F.**
**408 Wall Avenue**
**Pitcairn Pennsylvania (US)**
Inventor: **Sherwood, Nancy S.**
**422 Scottsdale Drive**
**Coraopolis Pennsylvania 15108 (US)**
Inventor: **Boffardi, Bennett P.**
**5723 Glen Hill Drive**
**Bethel Park Pennsylvania 15102 (US)**
Inventor: **Yorke, Monica A.**
**1408 State Avenue**
**Coraopolis Pennsylvania (US)**
Inventor: **Amjad, Zahid**
**29331 Detroit Road Suite 5**
**West Lake Ohio 44145 (US)**

(74) Representative: **Crampton, Keith John Allen et al**
**D YOUNG & CO 10 Staple Inn**
**London WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 156 031 B1

**Description**

Polyampholytes are polymers containing both a cationic and an anionic mer unit, nonionic mer units optionally being present. Polyampholytes have found particular use as retention aids in the paper industry (see for example, U.S. Patents US—A—3,639,208 and US—A—4,171,417). There has also been some use of polyampholytes in the oil-drilling industry (see for example, published British Patent Application GB—A—2,044,321 and U.S. Patent US—A—4,330,450).

In producing oil from both natural and artificial water driven oil reservoirs, the wells ultimately produce sufficiently large volumes of connate water to constitute a serious operating problem and eventually production of the water forces abandonment of the well. The cost of raising water to the Earth's surface and of separating it from the oil represents an economic loss and, in addition, in many instances, there is a problem in disposal of the waste water. Even more important, the total volume of fluid that can be produced daily is often limited by the well bore and artificial lift equipment so that water production unnecessarily reduces the oil production rate. In many instances, a portion of the reservoir is producing essentially all water, while the remainder is producing a substantial quantity of oil. If production from the watered-out portion of the reservoir is eliminated or reduced, the production, handling and disposal of large volumes of water is avoided. Certain polymers can reduce the water:oil production ratio so more oil is produced while handling less water. This results in major savings in operating costs, the avoidance of unnecessary depletion of the water drive, and increased production from the remaining oil interval which results in greater ultimate recovery and greater current income.

U.S. Patent US—A—4,330,450 is directed to the amphoteric water-in-oil self-inverting polymer emulsions containing polymer having 1 to 35 parts by weight anionic monomer units in the polymer. The primary use disclosed is in papermaking. Their use in secondary and tertiary oil recovery is suggested. However, polymers containing 1 to 35 parts by weight of anionic monomer units were found to be poor polymers to enhance oil recovery.

U.S. Patent Specification US—A—4,293,427 discloses an aqueous drilling fluid composition, a filtration control agent for utilization in the aqueous drilling fluid, and a method of forming a filter cake on the wall of a well for the reduction of filtrate from the drilling fluid, all of which use a copolymer of: a (meth)acrylamidoalkylsulfonic acid or alkali metal salt thereof and a (meth)acrylamide or N-alkyl-(meth)acrylamide. The copolymer may be cross-linked with a suitable quaternary ammonium salt, e.g. a (meth)acryloyloxyalkyltrimethylammonium salt, the amount of the latter being less than 1%.

The present invention provides a method of recovering oil and/or gas from a subterranean formation penetrated by a well bore and for reducing the concomitant production of reservoir water from it, comprising injecting into the formation through the well bore an aqueous treating solution or emulsion containing a polyampholyte prepared from

(i) 47 to 70%, by weight, of at least one anionic-containing monomer;

(ii) 5 to 33%, by weight, of at least one cationic-containing monomer; and

(iii) 20 to 48%, by weight, of at least one non-ionic monomer.

The preferred anionic component is a carboxylic functional monomer. Any carboxylic functional monomer, or its salt, may be used. Examples include acrylic acid, crotonic acid, methacrylic acid, vinyl acetic acid, allylacetic acid, 4-methyl-4-pentenoic acid, and dicarboxylic acids such as maleic acid and itaconic acid. The preferred carboxylic functional monomers are acrylic acid and methacrylic acid. Mixtures of carboxylic functional monomers may be used in preparing the polyampholyte.

Sulfonic functional polyampholytes are especially effective in enhanced oil recovery applications.

Any cationic-containing monomer may be used. The preferred cationic-containing monomers are:

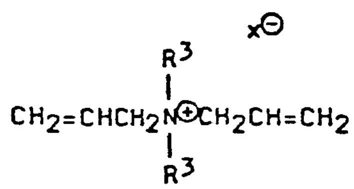
,
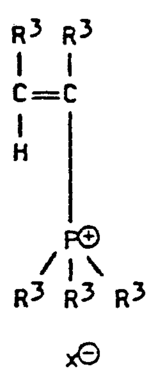
,
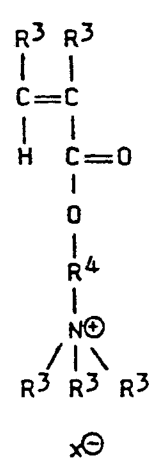
,

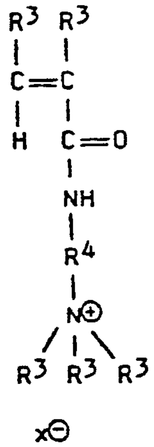
,
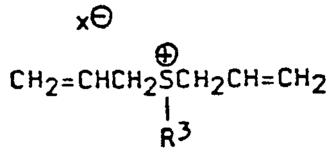
and
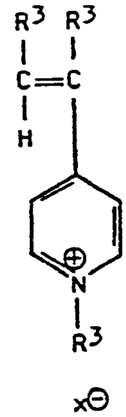

where $R^3$ is hydrogen, phenyl, or $C_{1-3}$ alkyl, preferably hydrogen or methyl; $R^4$ is a straight or branched chain of from 1 to 12 and preferably 1 to 3 carbon atoms; and X is an anion, preferably a halide or alkyl sulfate. Other examples of X include sulfate, sulfonate, phosphate, hydroxide, borate, cyanide, carbonate, thiocyanate, thiosulfate, isocyanate, sulfite, bisulfite, nitrate, nitrite, oxalate, silicate, sulfide, cyanate and acetate; other common inorganic and organic anions are also suitable.

Specific examples of the particularly preferred cationic-containing monomers include diethyldiallyl ammonium chloride, dimethyldiallyl ammonium chloride, methacryloyloxy ethyl trimethyl ammonium methylsulfate and methacrylamido propyl trimethyl ammonium chloride. Mixtures of cationic-containing monomers may be used in preparing the polyampholyte.

The polyampholyte may also be prepared by polymerizing a monomer containing a tertiary amine as the pendant group with subsequent quaternization of the nitrogen in the polymer to form the cationic mer units. Likewise, sulfur-containing and phosphorus-containing monomers may be exhaustively methylated to form cations.

One or more non-ionic monomers may optionally be used. Examples include: acrylamide and its derivatives, such as methacrylamide and N,N-dimethyl acrylamide; acrylonitrile; vinyl acetate; vinyl pyridine; hydroxyalkyl acrylates; methacrylate and its derivatives; butadiene; styrene and its derivatives, including substituted styrenes; esters of olefinic carboxylic acids; alkylene oxides; divinyl ketones; vinyl ketones; divinyl ethers and alkyl vinyl ethers. The preferred non-ionic monomer is acrylamide. Mixtures of non-ionic monomers may be used in preparing the polyampholyte.

The particularly preferred carboxylic functional polyampholytes are polymers, preferably terpolymers prepared from:

(i) at least one carboxylic functional monomer of the formula:

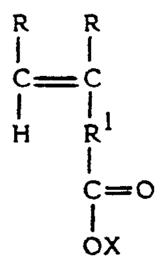

in which each R, which may be the same as or different from the other, is hydrogen, phenyl, $C_{1-3}$ alkyl or —COOX, preferably hydrogen, methyl or ethyl, $R^1$ is a straight or branched chain of from 0 to 12, preferably 0 to 3, carbon atoms, and X is hydrogen or an alkali or alkaline-earth metal, preferably hydrogen, sodium, potassium or caesium;

(ii) optionally, at least one non-ionic monomer, preferably of the formula:

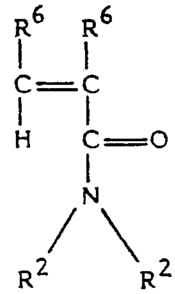

where each $R^6$, which may be the same as or different from the other, is hydrogen, phenyl or $C_{1-3}$ alkyl, preferably hydrogen, methyl, or ethyl, and each $R^2$, which may be the same as or different from the other, is hydrogen or $C_{1-3}$ alkyl, and

(iii) at least one cationic-containing monomer, preferably one containing a quaternary ammonium, phosphonium or sulfoniumion.

Non-ionic monomer may be used, and subsequently hydrolysed to obtain the desired amount of anionic component. Likewise, a copolymer may be prepared from non-ionic monomer and cationic monomer with subsequent hydrolysis of the non-ionic monomer to form the anionic portion, e.g. acrylamide can be hydrolysed to form acrylic acid.

The term "aqueous", as used herein, is intended to include water in any physical state and to include water in which is dissolved or dispersed any substance, for example, inorganic salts in brine or seawater.

The polyampholyte polymers may be prepared by mixing the monomers preferably in the presence of a free radical initiator. Any free radical initiator may be used. Examples include peroxides, azo initiators and redox systems. The preferred catalysts are sodium persulfate or a mixture of ammonium persulfate and any azo type initiator, such as 2,2'-azobis-(2,4-dimethyl-4-methoxyvaleronitrile). The polymerization may also be initiated photochemically.

The polyampholyte may be made by any of a variety of procedures, for example, in solution, suspension, bulk and emulsions.

The temperature is not critical. The reaction will generally occur between 10 and 100°C., preferably 40 to 60°C. It is generally impractical to run the reaction below room temperature because the reaction is too slow. Above a temperature of 60°C., the molecular weight of the polymer tends to decrease. The reaction, depending on the temperature, generally takes from 1 to 12 hours. Measuring for residual monomer will verify when the reaction is complete.

The pH of the reaction mixture is not critical. The pH is generally in the range of 4.5 to 9.0.

The molecular weight of ampholytic polymers is difficult to accurately measure. The polymers are instead, usually identified by intrinsic viscosity. The intrinsic viscosity of the polyampholyte is not critical in the invention. It is preferred that it be at least .05 dl/g. in 1.0 *M* sodium chloride (measured on a 75 Cannon Ubbelohde capillary viscometer).

In the process of the present invention, the concentration of amphoteric polymer treating agent in the aqueous solution pumped down the well may vary over a wide range, from 1 ppm to 5% by weight. The optimum concentration will depend, to a large extent, upon the volume of reservoir water with which the treating solution will be diluted in the formation and the crude oil viscosity. It is preferred to adjust the concentration of treating agent, and the volume of the aqueous slug injected, so that the concentration of treating agent in the formation waters will be from 0.01 to 0.5% by weight. It is further preferred that the volume of the aqueous slug injected be from 0.02 to 5% of the oil volume in the oil recovery area around the well being treated.

It is preferred that the anionic-containing monomer be of the formula:

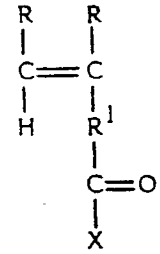

in which each R, which may be the same as or different from the other is hydrogen, phenyl or $C_{1-3}$ alkyl, $R^1$ is a straight or branched chain of from 0 to 12 carbon atoms, and X is $—NHCH_2C(CH_3)_2SO_3Y$ or OY, where Y is hydrogen or an alkali or alkaline earth metal.

It is preferred that the anionic-containing monomer be acrylic acid, methacrylic acid, vinyl acetic acid, crotonic acid, allylacetic acid, 4-methyl-4-pentenoic acid or acrylamide methyl propane sulfonic acid; the cationic-containing monomer be dimethyldiallyl ammonium chloride, methacryloyloxy ethyl trimethyl

ammonium methylsulfate or methacrylamido propyl trimethyl ammonium chloride, and the optional nonionic monomer be acrylamide or its derivatives, acrylonitrile, vinyl acetate, butadiene, vinyl pyridine, methacrylate or its derivatives, or styrene or its derivatives.

The especially preferred polymer is prepared from acrylic acid, methacryloyloxy ethyl trimethyl ammonium methylsulfate and acrylamide.

The higher the intrinsic viscosity of the polymers, the better they appear to work. Intrinsic viscosities of 10 to 20 are preferred.

In carrying out the process of this invention, the injection procedures are conventional, i.e., the well to be treated is suitably fitted with packers, if required, and the aqueous treating agent is forced down the well bore and out into the reservoir formation by means of conventional pumping equipment (if required) located at the well head.

For a producing well, the injection can be completed in about 1/2 to 3 days, after which the well may be immediately placed back on production. The initial well effluent following the treatment is sharply reduced in water/oil ratio, and production may be continued for several weeks or months with improved oil recovery and reduced water production. Gradually, however, the water/oil ratio will begin to rise again, and when the ratio reaches an undesirably high level, the well may be again shut in and the treatment repeated to again improve production.

For secondary and tertiary enhanced oil recovery, a polymer slug is followed by water, in a pattern of injection wells, until a satisfactory sweep of the producing formation has been obtained.

The process of this invention may be used in waterflooding (injection well), tertiary recovery or a producing well, either an oil well or a gas well. The producing well may be operating under natural flow conditions, or it may be a producing well involved in a secondary recovery operation wherein a flooding medium, or gaseous driving medium is being injected into an adjacent well. It is contemplated that in such secondary recovery operations, treatment of the producing well will cause the selective diversion of reservoir waters to other wells, or to adjacent aquafer structures, thus reducing the water/oil ratio in the producing well effluent.

The polymers used in the method of the present invention may be prepared by methods set out in parent European Patent Specification EP—A—0 082 657, attention being directed particularly to the preparations of Polymers 1 to 58 given in the Examples.

The following Examples 4 to 12 illustrate but do not limit the process of the present invention. Examples 1 to 3 are for comparison only.

Polyampholytes were dissolved at 600 mg/l polymer concentration in deionized water and, in the lower half of the table, 2% sodium chloride Brookfield viscosities were measured at room temperature (25°C). The viscosities at varying RPM are summarized in the Table.

TABLE

Viscosity of Polymer in Deionised Water, mPa.s
Brookfield Viscosity, 1 Spindle
600 mg/l, 25°C.

| Example Polymer: | RPM | 1* HPAM 35% SOLIDS | 2* 25% SOLIDS 70% HPAM 30% DMDAAC | 3* HPAM 18% SOLIDS | 4 13 | 5 11 | 6 31 | 7 32 | 8 33 | 9 34 | 10 35 | 11 36 | 12 37 |
|---|---|---|---|---|---|---|---|---|---|---|---|---|---|
| | 0.3 | 2520 | 380 | 460 | 700 | 500 | 120 | 3060 | 60 | 20 | 60 | 320 | 1460 |
| | 0.6 | 1730 | 360 | 380 | 560 | 400 | 90 | 2130 | 50 | 20 | 20 | 320 | 1140 |
| | 1.5 | 1004 | 274 | 292 | 440 | 320 | 84 | 1248 | 24 | 12 | 16 | 260 | 820 |
| | 3.0 | 636 | 210 | 226 | 338 | 248 | 86 | 810 | 14 | 10 | 14 | 240 | 630 |
| | 6.0 | 399 | 156 | 174 | 249 | 186 | 73 | 502 | 17 | 14 | 15 | 190 | 470 |
| | 12.0 | 249 | 112 | 126 | 176 | 135 | 65 | 317 | 22 | 22 | 15 | 148 | 336 |
| | 30.0 | 133 | 69 | 80 | 106 | 85 | 49 | 165 | 18 | 19 | 15 | 97 | 194 |
| | 60.0 | 80 | 49 | 57 | 72 | 59 | 43 | Off scale (>100) | 17 | 19 | 9 | 70 | Off scale (>100) |
| | | | | | Viscosity of Polymer In 2% NaCl, mPa.s Brookfield Viscosity, UL Adapter 600 mg/l, 25°C. | | | | | | | | |
| | 1.5 | 6.1 | 3.4 | 2.6 | 6.0 | 5.0 | 4.4 | 6.4 | 3.6 | 5.6 | 4.4 | 4.0 | Sample Did Not Dissolve, Presumably due to Highly Cross-Linked Polymer |
| | 3.0 | 4.9 | 3.2 | 2.5 | 4.8 | 4.0 | 3.6 | 5.4 | 2.8 | 4.4 | 3.4 | 2.6 | |
| | 6.0 | 4.4 | 2.8 | 2.4 | 4.2 | 3.3 | 3.3 | 4.3 | 2.4 | 3.7 | 2.7 | 1.9 | |
| | 12.0 | 4.0 | 2.5 | 2.2 | 3.6 | 2.8 | 2.3 | 3.7 | 2.0 | 3.0 | 2.2 | 1.6 | |
| | 30.0 | 3.8 | 2.4 | 2.0 | 3.3 | 2.6 | 2.1 | 3.3 | 1.5 | 1.6 | 1.7 | 1.2 | |
| | 60.0 | 3.6 | 2.3 | 1.9 | 3.1 | 2.4 | 1.9 | 3.1 | 1.3 | 2.6 | 1.6 | 1.1 | |

* Comparison Examples
MPAM — hydrolysed polyacrylamide
DMDAAC — dimethyldiallyl ammonium chloride

In the Table, the polymer numbers correspond to those in the parent specification. They are as follows:

| Polymer | Monomer Cationic/Anion/Non-Ionic | Weight Percent | Initiator (Moles Initiator/Moles Monomer) | Chain Transfer Agent | Percent Solids | pH | Temperature (°C.) | [η] |
|---|---|---|---|---|---|---|---|---|
| 11 | DMDAAC/AA/AM | 10/47/43 | .003 SPS/1.6 × $10^{-4}$ SMBS | — | 30 | 4.5 | 75 | 0.55 |
| 13 | DMDAAC/AA/AM | 10/70/20 | .003 SPS/1.6 × $10^{-4}$ SMBS | — | 30 | 4.5 | 50 | 2.8 |
| 31 | MAPTAC/AMPS/AM | 10/70/20 | 5.3 × $10^{-5}$ Riboflavin | 1% IPA | 30 | 4.5 | 50 | 5.5 |
| 32 | METAMS/AA/AM | 5/47/48 | 5.3 × $10^{-5}$ Riboflavin | 1% IPA | 30 | 4.5 | 50 | 14.0 |
| 33 | DMDAAC/AA/AH | 8/60/32 | 1.06 × $10^{-4}$ Riboflavin/.053 SPS | 1% IPA | 30 | 4.5 | 50 | 3.3 |
| 34 | METAMS/AA/AM | 8/60/32 | 7.35 × $10^{-5}$ Riboflavin | 20% TEA | 30 | 4.5 | 50 | 11.2 |
| 35 | DMDAAC/AA/AM | 8/60/32 | 1.06 × $10^{-4}$ Riboflavin | 20% TEA | 30 | 4.5 | 50 | 5.1 |
| 36 | METAMS/AA/AM | 8/60/32 | 7.35 × $10^{-5}$ Riboflavin | 2.1% TEA | 30 | 4.5 | 50 | 11.0 |
| 37 | METAMS/AA/AM | 8/60/32 | 4.2 × $10^{-5}$ Riboflavin | 1% IPA | 30 | 4.5 | 50 | 11.2 |

Polymers 11 and 13 were produced by mixing the cationic, anionic and optional non-ionic monomers indicated, using the amounts, solids concentration, initial temperatures and pH indicated. The monomer mix was purged with nitrogen for one hour. The solvent was deionized water. The initiator was added and the components allowed to react for about 3 hours.

Polymers 31 to 37 were prepared by mixing the cationic, anionic and nonionic monomers in the ratios indicated. The solutions were then neutralized to a pH of 7.0 with 50% w/v aqueous sodium hydroxide. Chain transfer agent and catalyst were added in the amounts indicated. The solutions were placed under fluorescent lights for sixty minutes. The resulting gels were diluted to 600 mg/L active polymer.

The abbreviations used are as follows:

DMDAAC = dimethyldiallyl ammonium chloride
AA = acrylic acid
AM = acrylamide
MAPTAC = methacrylamido propyl trimethyl ammonium chloride
METAMS = methacryloyloxyethyl trimethyl ammonium methylsulfate
AMPS = acrylamido methylpropane sulfonic acid
IPA = isopropyl alcohol
TEA = triethanolamine
[η] is in dl/g in 1.0 *M* sodium chloride, measured on a 75 Cannon Ubbelohde Capillary Viscometer

## Claims

1. A method of recovering oil and/or gas from a subterranean formation penetrated by a well bore and for reducing the concomitant production of reservoir water from it, comprising injecting into the formation through the well bore an aqueous treating solution or emulsion containing a polyampholyte prepared from
(i) 47 to 70%, by weight, of at least one anionic-containing monomer;
(ii) 5 to 33%, by weight, of at least one cationic-containing monomer; and
(iii) 20 to 48%, by weight, of at least one non-ionic monomer.

2. A method as claimed in Claim 1 in which the anionic-containing monomer is a carboxylic or sulfonic functional monomer and the cationic-containing monomer is diethyldiallyl ammonium chloride, dimethyldiallyl ammonium chloride, methacryloyloxy ethyl trimethyl ammonium methylsulfate or methacrylamido propyl trimethyl ammonium chloride.

3. A method as claimed in Claim 2 in which the non-ionic monomer is acrylamide or its derivatives, acrylonitrile, vinyl acetate, butadiene, vinyl pyridine, methacrylate or its derivatives, or styrene or its derivatives.

4. A method as claimed in Claim 1 in which the polymer is prepared from acrylic acid, methacryloyloxy ethyl trimethyl ammonium methylsulfate and acrylamide.

5. A method as claimed in any preceding claim in which the concentration of treating agent in the formation waters is from 0.01 to 0.5% by weight and the volume of the aqueous slug injected is from 0.02 to 5% of the oil volume in the oil recovery area around the well being treated.

## Patentansprüche

1. Verfahren zur Gewinnung von Öl und/oder Gas aus einer von einem Bohrloch durchdrungenen unterirdischen Formation und zur Verminderung der damit einhergehenden Produktion von Reservoirwasser durch Injektion einer wässrigen Behandlungslösung oder -emulsion durch das Bohrloch in die Formation, welche einen aus
(i) 47 bis 70 Gew.-% wenigstens eines Anion-haltigen Monomeren;
(ii) 5 bis 33 Gew.-% wenigstens eines Kation-haltigen Monomeren; und
(iii) 20 bis 48 Gew.-% wenigstens eines nicht-ionischen Monomeren hergestellen Polyampholyten enthält.

2. Verfahren, wie in Anspruch 1 beansprucht, worin das Anion-haltige Monomer ein carboxylisch- oder sulfonischfunktionelles Monomer ist und das Kation-haltige Monomer Diethyldiallylammoniumchlorid, Dimethyldiallylammoniumchlorid, Methacryloyloxyethyltrimethylammoniummethylsulfat oder Methacrylamidopropyltrimethylammoniumchlorid ist.

3. Verfahren, wie in Anspruch 2, beansprucht, worin das nicht-ionische Monomer Acrylamid oder dessen Derivate, Acrylnitril, Vinylacetat, Butadien, Vinylpyridin, Methacrylat oder dessen Derivate oder Styrol oder dessen Derivate ist.

4. Verfahren, wie in Anspruch 1 beansprucht, worin das Polymer aus Acrylsäure, Methacryloyloxyethyltrimethylammoniummethylsulfat und Acrylamid hergestellt wird.

5. Verfahren, wie in einem der vorstehenden Ansprüche beansprucht, worin die Konzentration des Behandlungsmittels im Wasser der Formation 0,01 bis 0,5 Gew.-% beträgt und das Volumen des injizierten wässrigen Schlamms 0,02 bis 5% des Ölvolumens in der Ölgewinnungsfläche um die behaldelte Quelle beträgt.

**Revendications**

1. Un procédé pour l'extraction de pétrole et/ou de gaz d'une formation souterraine traversée par un puits de forage et pour réduire la production concomitante d'eau du réservoir par le puits, comprenant l'injection dans la formation par le puits de forage d'une solution ou émulsion aqueuse de traitement contenant un polyampholyte préparé à partir de

(1) 47 à 70% en poids d'au moins un monomère à anion actif;

(2) 5 à 33% en poids d'au moins un monomère à cation actif; et

(3) 20 à 48% en poids d'au moins un monomère non-ionique.

2. Un procédé selon la revendication 1, dans lequel le monomère à anion actif est un monomère à groupe fonctionnel carboxylique ou sulfonique et le monomère à cation actif est le chlorure de diéthylallyl ammonium, le chlorure de diméthylallyl ammonium, le méthylsulfate de méthacryloxy éthyl triméthyl ammonium ou le chlorure de méthacrylamido propyl triméthyl ammonium.

3. Un procédé selon la revendication 2, dans lequel le monomère non-ionique est l'acrylamide ou ses dérivés, l'acrylonitrile, l'acétate de vinyle, le butadiène, la vinyl pyridine, un méthacrylate ou ses dérivés ou le styrène ou ses dérivés.

4. Un procédé selon la revendication 1, dans lequel le polymère est préparé à partir d'acide acrylique, de méthylsulfate de méthacryloxy éthyl triméthyl ammonium et d'acrylamide.

5. Un procédé selon l'une quelconque des revendications précédentes, dans lequel la concentration de l'agent de traitement dans les eaux de la formation est comprise entre 0,01 et 0,5% en poids et le volume du bouchon aqueux injecté est compris entre 0,02 et 5% du volume de pétrole dans la zone d'extraction de pétrole autour du puits que l'on traite.